Europäisches Patentamt

(19) European Patent Office

Office européen des brevets

(11) Publication number: **0 160 774**
**B1**

(12) **EUROPEAN PATENT SPECIFICATION**

(45) Date of publication of patent specification: **22.07.87**

(21) Application number: **84850143.3**

(22) Date of filing: **04.05.84**

(51) Int. Cl.⁴: **E 03 B 3/15, C 02 F 1/64**

(54) **A process for the purification of water.**

(43) Date of publication of application:
**13.11.85 Bulletin 85/46**

(45) Publication of the grant of the patent:
**22.07.87 Bulletin 87/30**

(84) Designated Contracting States:
**AT BE CH DE FR GB IT LI NL**

(56) References cited:
**DE-A-2 856 843**
**FR-E- 63 909**
**GB-A-1 244 065**
**US-A-2 352 832**

(73) Proprietor: **Vyrmetoder AB**
**Näsbydalsvägen 33A**
**S-183 31 Täby (SE)**

(72) Inventor: **Hallberg, Rolf Oskar**
**Skolvägen 11A**
**S-135 00 Tyresö (SE)**
Inventor: **Martinell, Rudolf Hakan**
**Ragvägen 4**
**S-183 65 Täby (SE)**

(74) Representative: **Delmar, John-Ake**
**Östermalmsgatan 45**
**S-114 26 Stockholm (SE)**

Courier Press, Leamington Spa, England.

## Description

The present invention relates to a process for removing iron and manganese from ground water, artificial ground water, that is infiltrated surface water, or surface water.

If such water prior to being used must be purified in order to remove iron and manganese ions such purification may be effected in a water treatment plant by adding oxygen to the water. Said oxygen may be added to the water in the form of pure oxygen or by aeration of the water, in which latter case the water is passed through a cascade aerator. The amount of oxygen necessary for the precipitation of the ions is comparatively small. When iron and manganese have been precipitated the water is filtered, e.g. by being passed through one or more sand layers. Capital investment costs for such a purification plant are high. In addition the operating costs will be quite considerable since the sand layers must be regenerated from time to time for removing the precipitated iron and manganese compounds.

Another prior art method for purifying ground water is described in patent specification GB—A—1,244,065, wherein the ground water is purified in situ. Water containing oxygen or oxygen-releasing substances is introduced intermittently into the aquifer through a number of injection wells or injection pipes arranged around the extraction well at some distance therefrom. The oxygen-containing water introduced creates a suitable environment for certain bacteria so that these in combination with purely chemical processes will bring about precipitation of the iron and manganese in the existing ground layers which will thus serve as a filter. The oxygen-containing water is added intermittently and usually for a period of about 24 hours. During the addition of oxygen-containing water the extraction well cannot be used for water supply to consumers since this would result in failures or disturbances in the operation system and in a deteriorated quality of the purified water, as will be explained below. Thus, two or more extraction wells are required for permitting a continuous supply of water.

The object of the present invention is to eliminate said disadvantage and to permit water to be pumped continuously from the extraction well. The process according to the invention also permits purification of ground water or surface water to proceed continuously in a basin or a filter containing naturally occurring filter material.

Thus, the present invention relates to a process for decreasing the contents of iron and manganese in ground water, artifical ground water, that is infiltrated surface water, or surface water flowing through an aquifer or through a basin or a filter containing naturally occurring filter material, in which process water containing oxygen or oxygen-releasing substances is introduced intermittently through a number of injection wells or injection pipes arranged around one or more extraction wells or extraction pipes for purified water. This process is characterized in that, during each introduction of water containing oxygen or oxygen-releasing substances, said water is fed to only some of the injection wells or injection pipes, and that simultaneously water is drawn from nearby, adjacent or intervening injection wells or injection pipes for the purpose of creating a zone for the oxidation and precipitation of iron and manganese at a distance sufficiently far from the extraction well or extraction pipe.

The water fed to some of the injection wells may consist of a portion of the water drawn from the extraction well and/or water drawn from other, nearby injection wells.

One embodiment of the invention, viz. the purification of ground water in an aquifer, will be described in greater detail below with reference to the enclosed drawing, in which Fig. 1 schematically shows a plant for purifying ground water in an aquifer; Fig. 2 illustrates the flow paths of oxygen-containing water added, if said water is fed to all the injection wells and simultaneously water is drawn from the extraction well; and Fig. 3 illustrates the flow paths of oxygen-containing water as added when operating in accordance with the present invention.

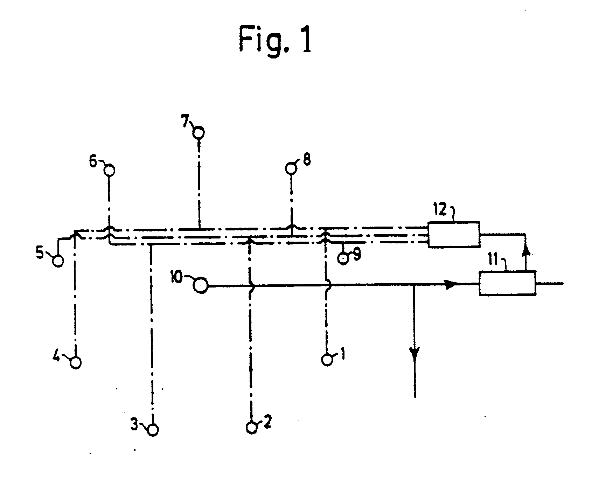

Numerals 1 through 9 in Fig. 1 designate injection wells, numeral 10 designates an extraction well, numeral 11 designates an oxygenation station, and numeral 12 designates a distribution station.

In accordance with the previously known process water has been supplied from the extraction well for e.g. 9 days, and the extraction well has then been out of service for e.g. 1 day. During that 10th day oxygen-containing water has been introduced into all injection wells.

As against this, according to the invention water containing oxygen or oxygen-releasing substances is fed for a period of e.g. 1 day to only some of the injection wells, e.g. the wells 1, 4 and 7. (The amount of water added in this case corresponds to at least $\frac{1}{3}$ of the total amount that would be added if water addition were effected to all of the nine injection wells.) At the same time water is drawn from one or more of the other injection wells. During the next day oxygen-containing water is fed to e.g. the wells 2, 5 and 8, and during the then following day such water is fed to the wells 3, 6 and 9. During all this time water is being pumped continuously from the extraction well, and a portion of this water may be oxygenated in a conventional manner and used as feed water to the injection wells. For a number of subsequent days, e.g. 7 days, no water is fed to the injection wells, and then the cycle is started again (in this example on day 11). Thus water can be drawn continuously from the extraction well, and only one well will be required for providing a continuous supply of water having the quality desired.

The above data are mere exemplifications; other combinations of injection wells, amounts of water and periods of time are possible as well. Furthermore, it is not necessary to arrange the injection wells symmetrically around the extraction well. Various arrangements are conceivable and will often be determined by local geohydrological conditions.

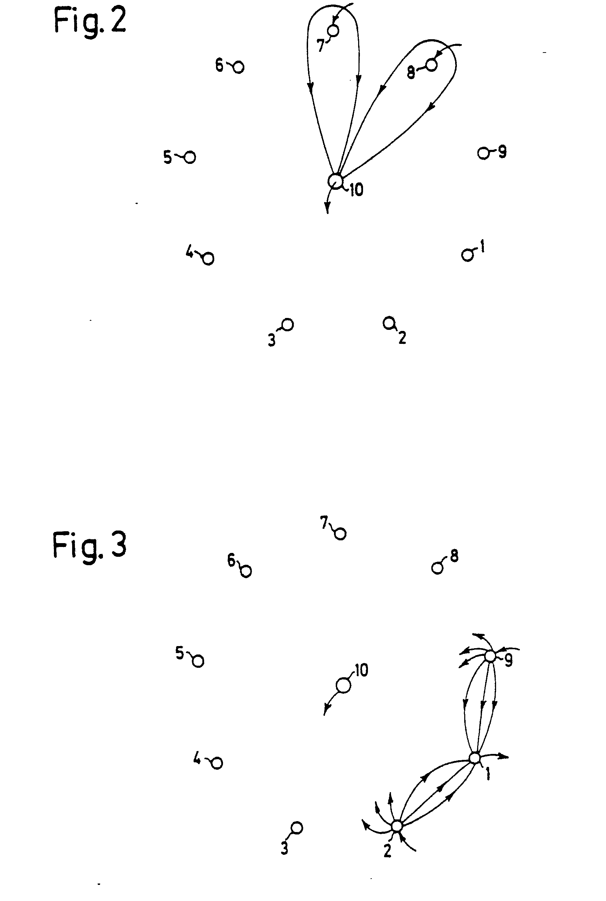

Fig. 2 illustrates what happens if oxygen-containing water is introduced into injection wells and simultaneously water is pumped from the extraction well but no water is pumped from one or more of the injection wells. The oxygen-containing water added will flow in narrow zones from the respective injection wells directly towards the extraction well. This means that the injection water will not cover the whole area between the injection wells, and impure water will flow between said narrow zones directly towards the extraction well. As a result a considerable part of the precipitation will take place very close to the extraction well. The strainers of the extraction well will then be clogged, thereby decreasing the capacity of said well. Eventually the extraction well will need restorative treatment, and finally it will become totally inoperative. Moreover, the purification process will not work satisfactorily, resulting in a deteriorated water quality.

Fig. 3 illustrates the process according to the invention exemplified by introduction of oxygen-containing water into the injection wells 2 and 9 and withdrawal of water from the injection well 1 (as well as from the extraction well 10). It can be seen that the oxygen-containing water thus introduced will flow in the aquifer in a manner such that the areas between the injection wells are covered completely, with a concomitant formation of a "curtain-type" oxidation and precipitation zone at a distance sufficiently far from the extraction well. This will enable purified water to be drawn continuously from the extraction well for being supplied to consumers. A portion of or all of the water drawn from some of the injection wells can be oxygenated in a conventional manner and then be fed to those injection wells through which oxygen-containing water is to be introduced into the aquifer.

If the extraction well is very deep the costs for injection wells will be very high, and for this reason a normal process with injection wells may be too expensive. In many aquifers there are several waterbearing layers, viz. layers separated by impermeable or semipermeable layers. In such cases water in the deep extraction well may be pumped up from the lower waterbearing layers and thence be fed to infiltration wells of such a depth that the water will flow on in a higher waterbearing layer where the purification process according to the invention can then be carried out.

The process according to the invention may also be used for the purification of ground water or surface water in e.g. a basin or a filter containing natually occuring filter material. For instance, soil may be excavated to form a cavity, and a sealing layer of clay, concrete, plastics tarpaulin or the like may be applied along the mantle surface. Infiltration pipes or drain pipes for raw water are applied inside the mantle of the basin thus prepared, whereupon the basin is filled with filter material, e.g. sand. Purified water is drawn from an extraction pipe or extraction well in the centre, and injection pipes for introducing oxygen-containing water are arranged between the mantle and the centre. A filter container of steel or plastics or other material may be employed instead of such a basin. Raw water is introduced inside the mantle of such a filter container, and purified water is drawn from an extraction pipe in the centre. Injection pipes for oxygen-containing water are arranged between the mantle and the centre. In the devices described above there will be a radial flow of raw water from the periphery towards the centre of a basin or filter container, but it is also possible to arrange for flow paths in the opposite direction, that is, from the centre to the mantle. Alternatively the raw water flow may be axial. Thus, raw water may be fed to one end of the filter container and purified water withdrawn from the other end. In this case injection pipes for oxygen-containing water are disposed in suitable positions between the inlet end and the outlet end.

**Claims**

1. A process for decreasing the contents of iron and manganese in ground water, artifical ground water, that is infiltrated surface water, or surface water flowing through an aquifer or through a basin or a filter containing naturally occurring filter material, in which process water containing oxygen or oxygen-releasing substances is introduced intermittently through a number of injection wells or injection pipes arranged around one or more extraction wells or extraction pipes for purified water, characterized in that, during each introduction of water containing oxygen or oxygen-releasing substances, said water is fed to only some of the injection wells or injection pipes, and that simultaneously water is drawn from nearby, adjacent or intervening injection wells or injection pipes for the purpose of creating a zone for the oxidation and precipitation of iron and manganese at a distance sufficiently far from the extraction well or extraction pipe.

2. A process according to claim 1, characterized in that the water fed to some of the injection wells or injection pipes consists wholly or partially of a portion of the water drawn from the extraction well or extraction pipe.

3. A process according to claim 1, characterized in that the water fed to some of the injection wells or injection pipes consists wholly or partially of water drawn from the other injection wells or injection pipes.

**Patentansprüche**

1. Verfahren zum Herabsetzen des Eisen- und Mangangehaltes in Grundwasser, künstlichem Grundwasser, d.h. infiltriertem Oberflächenwasser oder Oberflächenwasser, das durch eine wasserführende Schicht oder durch ein Becken oder ein Filter fließt, das natürlich auftretendes Filtermaterial enthält, bei welchem Verfahren Wasser, das Sauerstoff oder Sauerstoff freigebende Stoffe enthält, schrittweise durch eine Anzahl von Einspritzbohrlöchern oder Einspritzrohren eingeleitet wird, die um einen oder mehrere Entnahmebrunnen oder Entnahmerohre für gereinigtes Wasser angeordnet sind, dadurch gekennzeichnet, daß während jeder Einleitung des Wassers, das Sauerstoff oder Sauerstoff freigebende Stoffe enthält, dieses Wasser nur einigen der Einspritzbohrlöcher oder Einspritzrohre zugeführt wird, und dab gleichzeitig Wasser von naheliegenden, benachbarten oder dazwischenliegenden Einspritzbohrlöchern oder Einspritzrohren zum Zweck der Erzeugung einer Zone für die Oxidation und das Ausfällen von Eisen und Mangan in einem Abstand ausreichend weit weg vom Entnahmebrunnen oder Entnahmerohr abgezogen wird.

2. Verfahren nach Anspruch 1, dadurch gekennzeichnet, daß das Wasser, das einigen der Einspritzbohrlöcher oder Einspritzrohre zugeführt wird, ganz oder teilweise aus einem Teil des Wassers besteht, das vom Entnahmebrunnen oder Entnahmerohr abgezogen wird.

3. Verfahren nach Anspruch 1, dadurch gekennzeichnet, daß das Wasser, das einigen der Einspritzbohrlöcher oder Einspritzrohre zugeführt wird, ganz oder teilweise aus Wasser besteht, das von anderen Einspritzbohrungen oder Einspritzrohren abgezogen wird.

**Revendications**

1. Un procédé pour réduire les teneurs en fer et en manganèse dans l'eau souterraine, l'eau souterraine artificielle, c'est-à-dire l'eau de surface infiltrée, ou l'eau de surface s'écoulant à travers une zone aquifère ou à travers un bassin ou un filtre contenant une matière filtrante naturelle, procédé dans lequel de l'eau contenant de l'oxygène ou des substances libérant de l'oxygène est introduite par intervalles à travers un certain nombre de puits d'injection ou de tuyaux d'infection disposés autour d'un ou plusieurs puits d'extraction ou tuyaux d'extraction pour l'eau purifiée, caractérisé en ce que, pendant chaque introduction d'eau contenant de l'oxygène ou des substances libérant de l'oxygène, cette eau est envoyée seulement à certain des puits d'injection ou tuyaux d'injection et en ce que l'on soutire simultanément de l'eau de puits ou de tuyaux d'injection très proches, immédiatement voisins ou intermédiaires afin de créer une zone pour l'oxydation et la précipitation du fer et du manganèse à une distance suffisamment grande du puits d'extraction ou du tuyau d'extraction.

2. Un procédé selon la revendication 1, caractérisé en ce que tout ou partie de l'eau envoyée à certains des puits ou tuyaux d'injection consiste en une portion de l'eau soutirée du puits ou tuyau d'extraction.

3. Un procédé selon la revendication 3, caractérisé en ce que tout ou partie de l'eau envoyée à certains des puits ou tuyaux d'injection consiste en eau soutirée des autres puits ou tuyaux d'injection.

# Fig. 1

Fig.2

Fig.3